# EUROPEAN PATENT APPLICATION

(11) **EP 4 737 147 A1**
(43) Date of publication of application: **06.05.2026**
(21) Application number: 24831368.6
(22) Date of filing: 09.04.2024
(51) Int. Cl.: B60H 1/32

(54) **MANIFOLD**

(30) Priority: 28.06.2023 JP 2023106334
(71) Applicant: AISIN CORPORATION, Kariya-shi, Aichi 448-8650 (JP)
(72) Inventor: OTSUKA, Kosuke, Kariya-shi, Aichi 448-8650 (JP); KURIMOTO, Akira, Kariya-shi, Aichi 448-8650 (JP)
(74) Representative: TBK
(86) International application number: PCT/JP2024/014364
(87) International publication number: WO 2025/004493

(57) **Abstract**

A manifold includes: a manifold body including a high-temperature portion including a high-temperature channel through which a high-temperature fluid having a temperature equal to or higher than a first temperature flows, and a low-temperature portion including a low-temperature channel through which a low-temperature fluid having a temperature equal to or lower than a second temperature that is lower than the first temperature flows; and an anchoring portion that anchors the manifold body to an anchorage object. The anchoring portion is at least one anchoring portion disposed at an end of the low-temperature portion of the manifold body.

## Description

### TECHNICAL FIELD

The present disclosure relates to a manifold.

### BACKGROUND ART

Hitherto, there is known a system that is related to thermal management and is installed in a vehicle for the purpose of air conditioning of a vehicle cabin, etc. (e.g., Patent Document 1). Patent Document 1 discloses a manifold (thermal management system in Patent Document 1) that includes a coolant reservoir, channels, a mounting portion, and a mounting bracket, and through which fluids (coolant and refrigerant) flow. The mounting portion is equipped with a plurality of water pumps, a plurality of valves, a plurality of heat exchangers, etc. The mounting bracket includes four anchoring portions (mounting feet in Patent Document 1), and the manifold is fixed to a vehicle body by fixing the anchoring portions to a vehicle body support frame.

### Related Art Documents

### Patent Documents

Patent Document 1: Chinese Unexamined Patent Application Publication No. 114789636 (CN 114789636 A)

### SUMMARY OF THE INVENTION

### Problem to be Solved by the Invention

Since the manifold disclosed in Patent Document 1 includes the plurality of heat exchangers, a high-temperature fluid and a low-temperature fluid flow through the manifold. That is, the manifold includes a high-temperature circuit through which the high-temperature fluid flows and a low-temperature circuit through which the low-temperature fluid flows. In general, substances contract at low temperatures and expand at high temperatures. In the manifold, a portion including the high-temperature circuit expands and a portion including the low-temperature circuit contracts. For example, when two or more of the four anchoring portions are formed at the portion including the low-temperature circuit, the anchoring portions are fixed and anchored to the vehicle body support frame, and the areas near the two or more anchoring portions formed at the portion including the low-temperature circuit contract to generate tensile stress between the two or more anchoring portions. In the worst case, the manifold may be damaged.

Therefore, there is a demand for a manifold that is resistant to damage even when fixed and anchored to a vehicle body support frame etc.

### Means for Solving the Problem

A manifold according to one embodiment of the present disclosure includes: a manifold body including a high-temperature portion including a high-temperature channel through which a high-temperature fluid having a temperature equal to or higher than a first temperature flows, and a low-temperature portion including a low-temperature channel through which a low-temperature fluid having a temperature equal to or lower than a second temperature that is lower than the first temperature flows; and an anchoring portion that anchors the manifold body to an anchorage object. The anchoring portion is at least one anchoring portion disposed at an end of the low-temperature portion of the manifold body.

In the present embodiment, the at least one anchoring portion is disposed at the end of the low-temperature portion of the manifold body. Therefore, the manifold is less likely to be damaged. Since the anchoring portion is disposed at the end of the low-temperature portion of the manifold body, the anchoring portion does not hinder the disposition of the high-temperature channel or the low-temperature channel.

### BRIEF DESCRIPTION OF THE DRAWINGS

[FIG. 1] FIG. 1 is a diagram showing a refrigerant circuit according to embodiments.
[FIG. 2] FIG. 2 is a diagram showing the configuration of a manifold body according to a first embodiment.
[FIG. 3] FIG. 3 is a diagram showing the configuration of a manifold body according to a second embodiment.
[FIG. 4] FIG. 4 is a diagram showing the configuration of a manifold body according to a third embodiment.

### MODES FOR CARRYING OUT THE INVENTION

Hereinafter, a manifold according to embodiments of the present disclosure will be described with reference to the drawings. However, the present disclosure is not limited to the following embodiments, and various modifications may be made without departing from the spirit and scope of the present disclosure.

### [Configuration of Refrigerant Circuit]

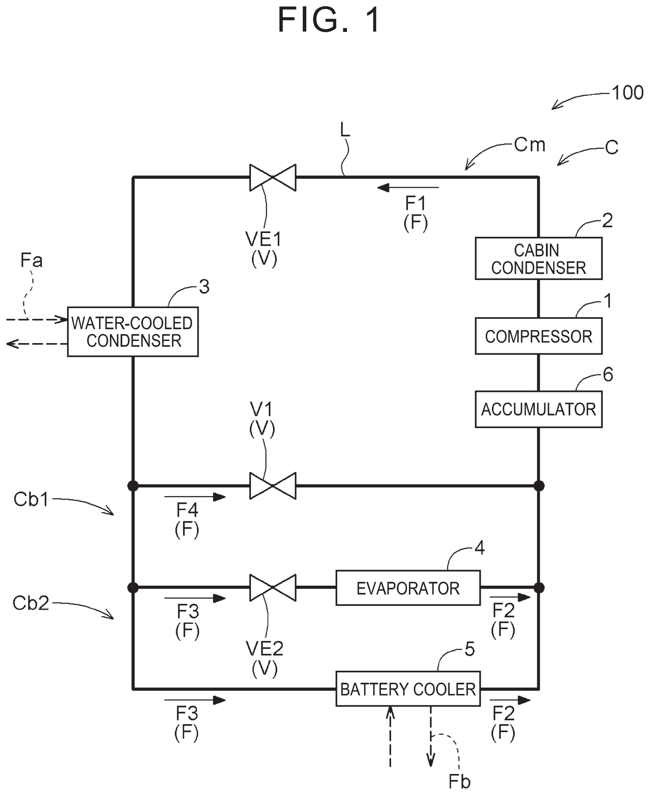

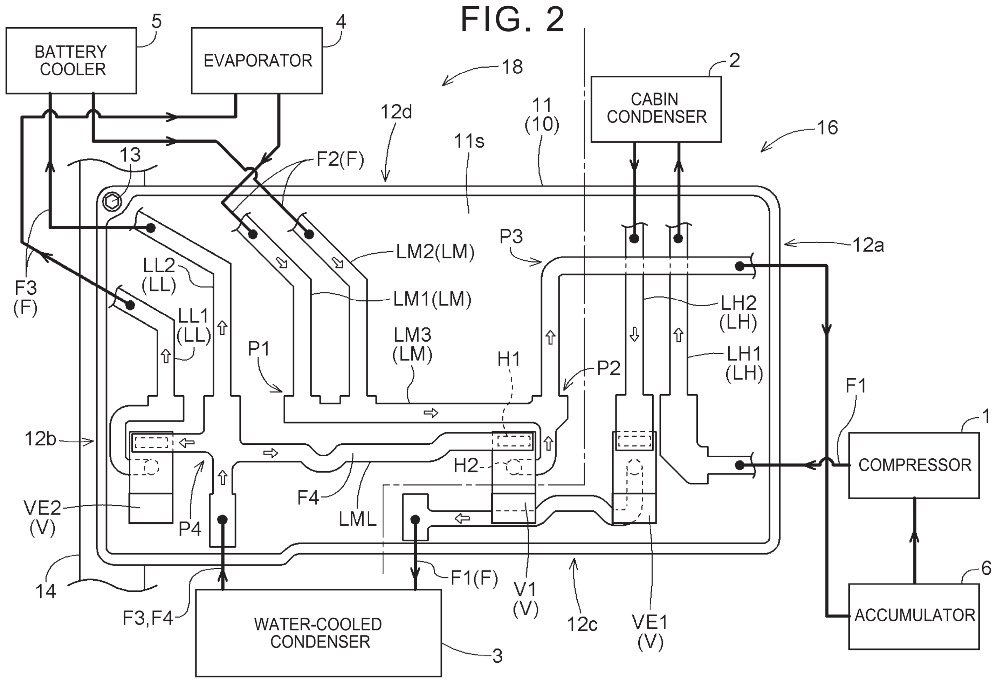

First, a refrigerant circuit C mounted on a vehicle such as an electric vehicle or a hybrid vehicle will be described with reference to FIG. 1. The refrigerant circuit C is constituted by a refrigerant channel L through which a cooling and heating refrigerant F for adjusting the temperature in a vehicle cabin flows. The refrigerant F is, for example, hydrofluorocarbon (HFC) or hydrofluoroolefin (HFO). The refrigerant channel L is provided inside a manifold body 11 of a manifold 10 described later (see FIG. 2).

As shown in FIG. 1, the refrigerant circuit C includes a compressor 1, a cabin condenser 2 (heating condenser), a water-cooled condenser 3, an evaporator 4, a battery cooler 5, an accumulator 6, and valves V. The compressor 1, the cabin condenser 2, the water-cooled condenser 3, the evaporator 4, the battery cooler 5, the accumulator 6, and the valves V are connected via the refrigerant channel L.

The valves V include an on-off valve V1 provided between the water-cooled condenser 3 and the accumulator 6. The valves V further include a first expansion valve VE1 provided between the cabin condenser 2 and the water-cooled condenser 3, and a second expansion valve VE2 provided between the water-cooled condenser 3 and the evaporator 4.

The on-off valve V1 controls (allows or blocks) the flow of the refrigerant F between the water-cooled condenser 3 and the accumulator 6. When the on-off valve V1 is open, the refrigerant F flows through the compressor 1, the cabin condenser 2, the first expansion valve VE1, the water-cooled condenser 3, the on-off valve V1, the accumulator 6, and the compressor 1 in this order. Hereinafter, the refrigerant circuit C constituted by the compressor 1, the cabin condenser 2, the water-cooled condenser 3, the on-off valve V1, and the accumulator 6 will be referred to as "main circuit Cm."

The first expansion valve VE1 and the second expansion valve VE2 expand the refrigerant F to adjust the pressure of the refrigerant F. When the second expansion valve VE2 is open, the refrigerant F flows through the second expansion valve VE2 and the evaporator 4 in this order, and then flows into the main circuit Cm between the on-off valve V1 and the accumulator 6. As shown in FIG. 1, the refrigerant circuit C that branches from the main circuit Cm and is provided with the second expansion valve VE2 and the evaporator 4 will be referred to as "first branch circuit Cb1." For example, when the temperature in the vehicle cabin is to be increased (during a heating operation for the vehicle cabin), the on-off valve V1 is open and the second expansion valve VE2 is closed. When the temperature in the vehicle cabin is to be reduced (during a cooling operation for the vehicle cabin), the on-off valve V1 is closed and the second expansion valve VE2 is open.

The battery cooler 5 includes an expansion valve. The expansion valve of the battery cooler 5 is open when adjusting the temperature of a battery. When the expansion valve of the battery cooler 5 is open, the refrigerant F flows through the battery cooler 5 and then flows into the main circuit Cm between the on-off valve V1 and the accumulator 6. As shown in FIG. 1, the refrigerant circuit C that branches from the main circuit Cm and is provided with the battery cooler 5 will be referred to as "second branch circuit Cb2."

The compressor 1 compresses the refrigerant F into a high-temperature and high-pressure gas. Hereinafter, the refrigerant F compressed by the compressor 1 will be referred to as "high-temperature fluid F1" and the temperature of the high-temperature fluid F1 will be referred to as "first temperature." The first temperature is, for example, 80°C to 90°C.

The high-temperature fluid F1 compressed by the compressor 1 is sent to the cabin condenser 2, exchanges heat with air in the vehicle cabin during the heating operation (temperature drops as heat is removed), and is sent to the water-cooled condenser 3 via the first expansion valve VE1. A first heating medium Fa circulating through a circuit different from the refrigerant circuit C (e.g., a cooling circuit for cooling electronic circuits mounted on the vehicle) flows through the water-cooled condenser 3. The first heating medium Fa is a coolant such as a long-life coolant (LLC), insulating oil such as paraffin-based oil, or a refrigerant such as hydrofluorocarbon (HFC) or hydrofluoroolefin (HFO). The high-temperature fluid F1 sent to the water-cooled condenser 3 exchanges heat with the first heating medium Fa flowing through the water-cooled condenser 3 (temperature drops as heat is removed). Hereinafter, the refrigerant F after the temperature drop in the water-cooled condenser 3 will be referred to as "second low-temperature fluid F3" (an example of a low-temperature fluid). The temperature of the second low-temperature fluid F3 will be referred to as "third temperature." The third temperature is, for example, 15°C to 25°C.

The second low-temperature fluid F3 that flows out of the water-cooled condenser 3 and is sent to the second expansion valve VE2 is expanded into a gas-liquid mixed state (mist), and is sent to the evaporator 4. In the evaporator 4, the second low-temperature fluid F3 is gasified by exchanging heat with air introduced from the outside (temperature rises by removing heat).

The second low-temperature fluid F3 that flows out of the water-cooled condenser 3 and is sent to the battery cooler 5 is expanded by the expansion valve of the battery cooler 5. A second heating medium Fb circulating through a circuit different from the refrigerant circuit C (e.g., a cooling circuit for cooling the battery mounted on the vehicle) flows through the battery cooler 5. The second heating medium Fb is a coolant such as a long-life coolant (LLC), insulating oil such as paraffin-based oil, or a refrigerant such as hydrofluorocarbon (HFC) or hydrofluoroolefin (HFO). The second low-temperature fluid F3 sent to the battery cooler 5 is gasified by exchanging heat with the second heating medium Fb flowing through the battery cooler 5 (temperature rises by removing heat). Hereinafter, the refrigerant F after the heat exchange in the evaporator 4 or the battery cooler 5 will be referred to as "first low-temperature fluid F2" (an example of the low-temperature fluid). The temperature of the first low-temperature fluid F2 will be referred to as "second temperature." The second temperature is, for example, 60°C to 70°C. That is, the second temperature is lower than the first temperature, and the third temperature is lower than the second temperature.

The first low-temperature fluid F2 after the heat exchange in the evaporator 4 is sent to the accumulator 6, and the liquid contained in the first low-temperature fluid F2 is separated. The first low-temperature fluid F2 from which the liquid has been separated returns to the compressor 1. The first low-temperature fluid F2 after the heat exchange in the battery cooler 5 is also sent to the accumulator 6, and the liquid contained in the first low-temperature fluid F2 is separated. The gaseous first low-temperature fluid F2 from which the liquid has been separated returns to the compressor 1.

As described above, the temperature of the refrigerant F circulating through the refrigerant circuit C changes. Specifically, the temperature of the refrigerant F is as follows. The first temperature of the high-temperature fluid F1 flowing from the compressor 1 to the water-cooled condenser 3 is highest. The second temperature of the first low-temperature fluid F2 flowing from the evaporator 4 and/or the battery cooler 5 to the compressor 1 is next highest. The third temperature of the second low-temperature fluid F3 flowing from the water-cooled condenser 3 to the evaporator 4 and/or the battery cooler 5 is lowest. The temperature of the second low-temperature fluid F3 flowing from the water-cooled condenser 3 to merge with the main circuit Cm via the on-off valve V1 changes between the second temperature and the third temperature depending on the operating condition such as heating or cooling (the third temperature is lowest and the second temperature is highest).

### [First Embodiment]

Next, the configuration of the manifold 10 according to a first embodiment will be described with reference to FIG. 2. FIG. 2 is a diagram showing the configuration of the manifold body 11 of the manifold 10. The manifold 10 includes the manifold body 11 made of a metal material such as aluminum, a resin, etc. The refrigerant channel L described with reference to FIG. 1 is formed inside the manifold body 11. The manifold 10 is fixed and anchored to an anchorage object of the vehicle. In the present embodiment, the manifold 10 is fixed to a vehicle body support frame 14 that is an example of the anchorage object. The manifold 10 includes the manifold body 11 and an anchoring portion 13. By fixing the anchoring portion 13 to the vehicle body support frame 14, the manifold 10 (manifold body 11) is fixed and anchored to the vehicle body support frame 14. The anchorage object to which the manifold 10 is fixed and anchored is not limited to the vehicle body support frame 14, and may be any type of object such as a power supply module case or a motor case (not shown) mounted on the vehicle as long as the manifold 10 can be fixed and anchored reliably.

As shown in FIG. 2, the compressor 1, the cabin condenser 2, the water-cooled condenser 3, the evaporator 4, the battery cooler 5, and the accumulator 6 are provided outside the manifold body 11. The on-off valve V1, the first expansion valve VE1, and the second expansion valve VE2 are also provided outside the manifold body 11. In FIG. 2, the on-off valve V1, the first expansion valve VE1, and the second expansion valve VE2 are provided outside the manifold body 11, but are shown by continuous lines to indicate the respective positions.

In the present embodiment, the manifold body 11 has a box shape having a rectangular flat surface (hereinafter referred to as "principal surface 11s"). The principal surface 11s of the manifold body 11 is rectangular, and the refrigerant channel L is formed in the principal surface 11s. Hereinafter, the four ends of the manifold body 11 will be referred to as "first end 12a" (right end in FIG. 2), "second end 12b" (left end in FIG. 2; an example of an end), "third end 12c" (lower end in FIG. 2), and "fourth end 12d" (upper end in FIG. 2; an example of the end). The longitudinal direction of the principal surface 11s (the direction parallel to the third end 12c and the fourth end 12d) will be simply referred to as "longitudinal direction," and the transverse direction of the principal surface 11s (the direction parallel to the first end 12a and the second end 12b) will be simply referred to as "transverse direction."

The on-off valve V1, the first expansion valve VE1, and the second expansion valve VE2 are provided to overlap the manifold body 11 when viewed in a direction orthogonal to the principal surface 11s. The first expansion valve VE1, the on-off valve V1, and the second expansion valve VE2 are provided in this order from the first end 12a along the longitudinal direction.

The manifold body 11 has outlets through which the refrigerant F flows out from the manifold body 11 to the first expansion valve VE1, the on-off valve V1, and the second expansion valve VE2. The manifold body 11 also has inlets through which the refrigerant F flows into the manifold body 11 from the first expansion valve VE1, the on-off valve V1, and the second expansion valve VE2. Hereinafter, an outlet through which the refrigerant F from the water-cooled condenser 3 flows out to the on-off valve V1 among the outlets formed in the manifold body 11 will be referred to as "outlet H1," and an inlet through which the refrigerant F flows from the on-off valve V1 into the manifold body 11 among the inlets formed in the manifold body 11 will be referred to as "inlet H2." The outlet H1 and the inlet H2 are provided to face the on-off valve V1.

### [Configuration of Refrigerant Channel]

As described with reference to FIG. 1, the temperature of the refrigerant F is as follows. The first temperature of the high-temperature fluid F1 flowing from the compressor 1 to the water-cooled condenser 3 is highest. The second temperature of the first low-temperature fluid F2 flowing from the evaporator 4 and/or the battery cooler 5 to the compressor 1 is next highest. The third temperature of the second low-temperature fluid F3 flowing from the water-cooled condenser 3 to the evaporator 4 and/or the battery cooler 5 is lowest. That is, the manifold body 11 includes, as the refrigerant channel L (see FIG. 1), a high-temperature channel LH through which the high-temperature fluid F1 flows from the compressor 1 to the water-cooled condenser 3, a medium-temperature channel LM (an example of a low-temperature channel) through which the first low-temperature fluid F2 having a medium temperature flows from the evaporator 4 and/or the battery cooler 5 to the compressor 1, and a low-temperature channel LL through which the second low-temperature fluid F3 flows from the water-cooled condenser 3 to the evaporator 4 and/or the battery cooler 5.

In the present embodiment, the manifold body 11 further includes, as the refrigerant channel L, a medium-low-temperature channel LML (an example of the low-temperature channel) through which a third low-temperature fluid F4 (an example of the low-temperature fluid) having a low temperature to a medium temperature flows from the water-cooled condenser 3 to the on-off valve V1. Hereinafter, the portion of the manifold body 11 that includes the high-temperature channel LH will be referred to as "high-temperature portion 16." The portion other than the high-temperature portion 16 (e.g., the portion including the medium-temperature channel LM, the low-temperature channel LL, and the medium-low-temperature channel LML) will be referred to as "low-temperature portion 18." In FIG. 2, the high-temperature portion 16 is the portion rightward of the long dashed short dashed line, and the low-temperature portion 18 is the portion leftward of the long dashed short dashed line.

The high-temperature channel LH includes a first high-temperature channel LH1 (an example of a high-temperature channel) through which the high-temperature fluid F1 flows from the compressor 1 to the cabin condenser 2, and a second high-temperature channel LH2 (an example of the high-temperature channel) through which the high-temperature fluid F1 flows from the cabin condenser 2 to the water-cooled condenser 3.

The first high-temperature channel LH1 extends from the first end 12a of the manifold body 11 as a base end toward the second end 12b, bends toward the fourth end 12d, and reaches the fourth end 12d.

The second high-temperature channel LH2 extends from the fourth end 12d toward the third end 12c, passes through the first expansion valve VE1, bends toward the second end 12b, and reaches the third end 12c.

The second high-temperature channel LH2 is provided across the on-off valve V1. The outlet H1 for the refrigerant F to the on-off valve V1 is located away from the second high-temperature channel LH2 at a position where the outlet H1 faces the on-off valve V1. The inlet H2 is provided between the outlet H1 and the portion across which the second high-temperature channel LH2 is provided.

The medium-temperature channel LM includes a first medium-temperature channel LM1 through which the first low-temperature fluid F2 flows from the evaporator 4 to the accumulator 6, a second medium-temperature channel LM2 through which the first low-temperature fluid F2 flows from the battery cooler 5 to the accumulator 6, and a confluent medium-temperature channel LM3 where the first medium-temperature channel LM1 and the second medium-temperature channel LM2 are connected (streams of the first low-temperature fluid F2 merge).

The first medium-temperature channel LM1 extends from the fourth end 12d toward the third end 12c to be inclined with respect to the fourth end 12d, changes the direction to a direction parallel to the second end 12b midway (including "substantially parallel"; the same applies hereinafter), and extends to a first bending point P1. The first medium-temperature channel LM1 bends toward the first end 12a at the first bending point P1, and reaches the confluent medium-temperature channel LM3.

The second medium-temperature channel LM2 extends parallel to the first medium-temperature channel LM1 from the fourth end 12d toward the third end 12c to reach the confluent medium-temperature channel LM3.

The confluent medium-temperature channel LM3 extends along the longitudinal direction from the terminal end of the first medium-temperature channel LM1 toward the first end 12a, and is connected at a junction point P2 to the refrigerant channel L that runs from the water-cooled condenser 3 via the on-off valve V1. The confluent medium-temperature channel LM3 bends toward the fourth end 12d at the junction point P2, and extends along the transverse direction toward the fourth end 12d. The confluent medium-temperature channel LM3 further bends toward the first end 12a at a second bending point P3, extends along the longitudinal direction, and reaches the first end 12a. The confluent medium-temperature channel LM3 is provided across the high-temperature channel LH between the second bending point P3 and the terminal end.

The medium-low-temperature channel LML is the refrigerant channel L through which the third low-temperature fluid F4 flows from the water-cooled condenser 3 to the accumulator 6 via the on-off valve V1. The medium-low-temperature channel LML extends from the third end 12c toward the fourth end 12d in the transverse direction to reach a branch point P4. The branch point P4 is a position where the refrigerant F from the water-cooled condenser 3 branches into the third low-temperature fluid F4 flowing toward the on-off valve V1, the second low-temperature fluid F3 flowing toward the evaporator 4, and the second low-temperature fluid F3 flowing toward the battery cooler 5.

The medium-low-temperature channel LML bends toward the first end 12a at the branch point P4, extends along the longitudinal direction toward the first end 12a, passes through the on-off valve V1, and reaches the junction point P2 with the confluent medium-temperature channel LM3.

The low-temperature channel LL includes a first low-temperature channel LL1 (an example of the low-temperature channel) through which the second low-temperature fluid F3 flows from the water-cooled condenser 3 to the evaporator 4, and a second low-temperature channel LL2 through which the second low-temperature fluid F3 flows from the water-cooled condenser 3 to the battery cooler 5. In the present embodiment, the base ends of the first low-temperature channel LL1 and the second low-temperature channel LL2 are at the branch point P4.

The first low-temperature channel LL1 passes through the second expansion valve VE2, extends along the transverse direction toward the fourth end 12d, changes the direction to be inclined with respect to the fourth end 12d, and reaches the second end 12b.

The second low-temperature channel LL2 extends along the transverse direction. The second low-temperature channel LL2 changes the direction to be inclined with respect to the fourth end 12d at a point closer to the fourth end 12d than the bending point of the first low-temperature channel LL1 in the transverse direction, and reaches the corner between the second end 12b and the fourth end 12d.

### [Anchoring of Manifold]

As described above, the manifold body 11 of the manifold 10 is divided into the high-temperature portion 16 (rightward of the long dashed short dashed line in FIG. 2) including the high-temperature channel LH and the low-temperature portion 18 (leftward of the long dashed short dashed line in FIG. 2) other than the high-temperature portion 16. In the manifold 10 of the present embodiment, only one anchoring portion 13 is disposed in the low-temperature portion 18 of the manifold body 11, and the anchoring portion 13 is fixed to the vehicle body support frame 14. Specifically, the anchoring portion 13 is disposed at a location where the second end 12b and the fourth end 12d adjacent to each other in the manifold body 11 shown in FIG. 2 intersect each other. That is, the anchoring portion 13 is disposed at the end of the low-temperature portion 18 of the manifold body 11. By fixing the anchoring portion 13 to the vehicle body support frame 14, the manifold 10 is fixed and anchored to the vehicle body support frame 14. The location where the one anchoring portion 13 is disposed may be the central portion of the second end 12b as long as the manifold 10 is fixed stably.

In the present embodiment, the manifold 10 is fixed to the vehicle body support frame 14 by the only one anchoring portion 13 disposed in the low-temperature portion 18 of the manifold body 11. Since the first low-temperature fluid F2, the second low-temperature fluid F3, and the third low-temperature fluid F4 flow through the low-temperature portion 18, the temperature of the low-temperature portion 18 is low and the manifold body 11 including the vicinity of the anchoring portion 13 contracts. Since the manifold 10 is fixed to the vehicle body support frame 14 at one location (one anchoring portion 13), no tensile stress is generated in the manifold body 11, and the manifold 10 is less likely to be damaged. The only one anchoring portion 13 may be disposed in the high-temperature portion 16 of the manifold body 11 instead of the low-temperature portion 18.

### [Second Embodiment]

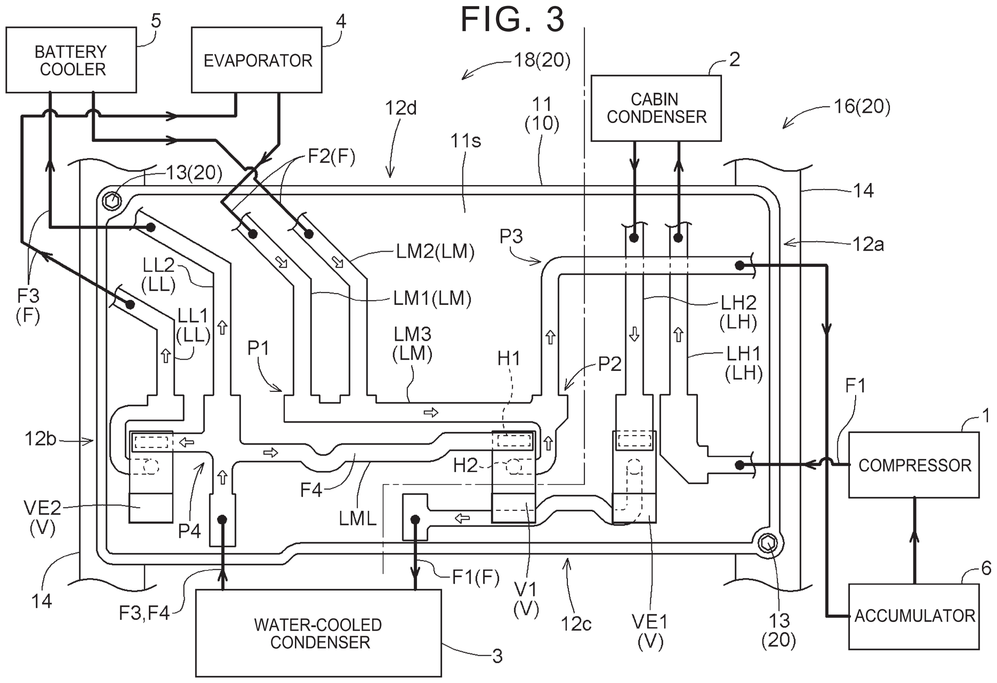

Next, a manifold 10 according to a second embodiment will be described with reference to FIG. 3. The present embodiment differs from the first embodiment in that two anchoring portions 13 are disposed to fix the manifold 10 to the vehicle body support frame 14. The configuration of the present embodiment is otherwise the same as that of the first embodiment. Therefore, in the description of the present embodiment, the portions with the same configurations as those of the first embodiment are denoted with the same signs, and detailed description of the same configurations will be omitted.

In the manifold 10 of the present embodiment, one anchoring portion 13 is disposed in the low-temperature portion 18 of the manifold body 11, and one anchoring portion 13 is disposed also in the high-temperature portion 16 of the manifold body 11. The anchoring portion 13 in the low-temperature portion 18 is disposed at the same location as in the first embodiment. The anchoring portion 13 in the high-temperature portion 16 is disposed at a location where the first end 12a and the third end 12c adjacent to each other in the manifold body 11 shown in FIG. 3 intersect each other. By fixing the two anchoring portions 13 to the separate portions of the vehicle body support frame 14, the manifold 10 is fixed and anchored to the vehicle body support frame 14.

In the present embodiment, the manifold 10 is fixed to the vehicle body support frame 14 by the one anchoring portion 13 disposed in each of the high-temperature portion 16 and the low-temperature portion 18 of the manifold body 11. That is, the manifold 10 is fixed and anchored to the vehicle body support frame 14 at two locations. Since the first low-temperature fluid F2, the second low-temperature fluid F3, and the third low-temperature fluid F4 flow through the low-temperature portion 18, the temperature of the low-temperature portion 18 is low and the manifold body 11 including the vicinity of the anchoring portion 13 contracts. Since the high-temperature fluid F1 flows through the high-temperature portion 16, the temperature of the high-temperature portion 16 is higher than that of the low-temperature portion 18, and the manifold body 11 including the vicinity of the anchoring portion 13 expands. Even when the manifold 10 is fixed to the vehicle body support frame 14 at two locations, the vicinity of the anchoring portion 13 in the low-temperature portion 18 contracts and the vicinity of the anchoring portion 13 in the high-temperature portion 16 expands. Therefore, the tensile stress due to the contraction and the compressive stress due to the expansion cancel out each other, and the stress is reduced in the manifold 10 as a whole. That is, in the manifold 10 of the present embodiment, a stress reducing structure 20 is formed by the anchoring portion 13 disposed in the high-temperature portion 16 and the anchoring portion 13 disposed in the low-temperature portion 18. With the stress reducing structure 20, no excessive stress is generated in the manifold body 11 even when the anchoring portions 13 are disposed at the plurality of locations (two locations), and the manifold 10 is less likely to be damaged.

### [Third Embodiment]

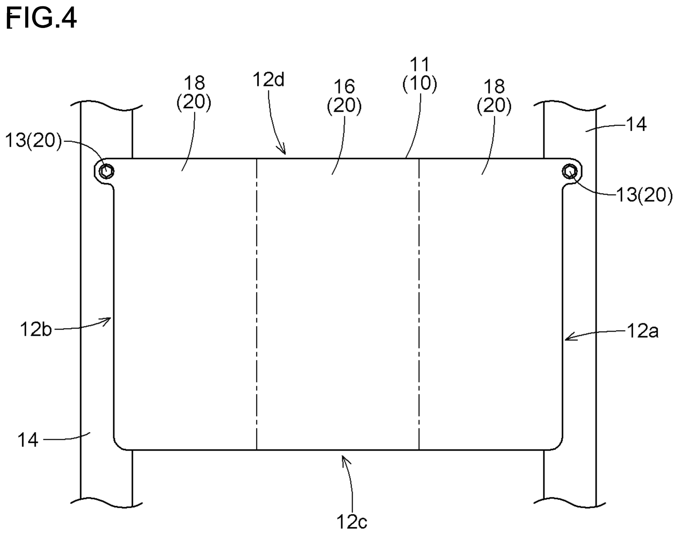

Next, a manifold 10 according to a third embodiment will be described with reference to FIG. 4. The present embodiment differs from the first and second embodiments in terms of the disposition of the high-temperature portion 16 and the low-temperature portion 18 in the manifold 10, and therefore differs in terms of the disposition of the anchoring portions 13. The configuration of the present embodiment is otherwise the same as those of the first and second embodiments. Therefore, in the description of the present embodiment, the portions with the same configurations as those of the first and second embodiments are denoted with the same signs, and detailed description of the same configurations will be omitted.

In the manifold 10 of the present embodiment, the high-temperature portion 16 is disposed at the center of the manifold body 11, and the low-temperature portions 18 are disposed on both sides of the high-temperature portion 16. One anchoring portion 13 is disposed in each of the low-temperature portions 18 on both sides. The two anchoring portions 13 in the low-temperature portions 18 are disposed at a location where the second end 12b and the fourth end 12d adjacent to each other in the manifold body 11 shown in FIG. 4 intersect each other, and at a location where the first end 12a and the fourth end 12d adjacent to each other in the manifold body 11 intersect each other. By fixing the two anchoring portions 13 to the separate portions of the vehicle body support frame 14, the manifold 10 is fixed and anchored to the vehicle body support frame 14.

In the present embodiment, the manifold 10 is fixed to the vehicle body support frame 14 by the one anchoring portion 13 disposed in each of the two low-temperature portions 18 of the manifold body 11. That is, the manifold 10 is fixed and anchored to the vehicle body support frame 14 at the two low-temperature portions 18. Since the low-temperature fluid flows through each of the low-temperature portions 18, the temperature of each of the low-temperature portions 18 is low and the manifold body 11 including the vicinities of the two anchoring portions 13 contracts. In the present embodiment, the high-temperature portion 16 through which the high-temperature fluid F1 flows is disposed between the two low-temperature portions 18. Therefore, the temperature of the high-temperature portion 16 is higher than those of the low-temperature portions 18, and the manifold body 11 expands. Even when the manifold 10 is fixed to the vehicle body support frame 14 at the two low-temperature portions 18, the vicinity of the anchoring portion 13 in the low-temperature portion 18 contracts and the high-temperature portion 16 disposed between the two low-temperature portions 18 expands. Therefore, the tensile stress due to the contraction and the compressive stress due to the expansion cancel out each other, and the stress is reduced in the manifold 10 as a whole. That is, in the manifold 10 of the present embodiment, the stress reducing structure 20 is formed by the high-temperature portion 16, the two low-temperature portions 18 disposed across the high-temperature portion 16, and the anchoring portions 13 disposed in the two low-temperature portions 18. With the stress reducing structure 20, no excessive stress is generated in the manifold body 11 even when the anchoring portions 13 are disposed at the plurality of locations (two locations) in the low-temperature portions 18, and the manifold 10 is less likely to be damaged.

### [Other Embodiments]

The present disclosure may be configured as follows in addition to the above embodiments (portions having the same functions as those of the above embodiments are denoted by the same numerals and signs as those of the above embodiments).
(1) In the manifold 10 of the third embodiment, the low-temperature portions 18 are disposed on both sides of the high-temperature portion 16. However, two high-temperature portions 16 and two low-temperature portions 18 are disposed alternately side by side. In this case, it is appropriate to dispose one anchoring portion 13 in each of the high-temperature portions 16 and the low-temperature portions 18. Alternatively, two high-temperature portions 16 and three low-temperature portions 18 may be disposed alternately side by side. In this case, it is appropriate to dispose one anchoring portion 13 in each of the low-temperature portions 18 at both ends.
(2) The anchoring portion 13 in each of the above embodiments is not limited to being disposed at the location described in the embodiment. The anchoring portion 13 may be disposed at any location as long as no tensile stress is generated. For example, in the first embodiment, the anchoring portion 13 may be disposed at a location where the second end 12b and the third end 12c of the manifold body 11 intersect each other. In the second embodiment, the anchoring portion 13 in the high-temperature portion 16 may be disposed at a location where the first end 12a and the fourth end 12d of the manifold body 11 intersect each other. In the third embodiment, the anchoring portion 13 in the high-temperature portion 16 may be disposed at a location where the first end 12a and the third end 12c of the manifold body 11 intersect each other.
(3) In the manifold 10 of the second embodiment, one anchoring portion 13 is disposed in each of the high-temperature portion 16 and the low-temperature portion 18, but the present disclosure is not limited to this. The manifold 10 may be structured such that the same number of anchoring portions 13 (e.g., two each) is disposed in each of the high-temperature portion 16 and the low-temperature portion 18. Alternatively, the manifold 10 may be structured such that the number of anchoring portions 13 disposed in the high-temperature portion 16 differs from the number of anchoring portions 13 disposed in the low-temperature portion 18.

The following configurations are possible for the embodiments described above.
<1> A manifold (10) according to one aspect includes: a manifold body (11) including a high-temperature portion (16) including a high-temperature channel (LH) through which a high-temperature fluid (F1) having a temperature equal to or higher than a first temperature flows, and a low-temperature portion (18) including a low-temperature channel (LM, LL, LML) through which a low-temperature fluid (F2, F3, F4) having a temperature equal to or lower than a second temperature that is lower than the first temperature flows; and an anchoring portion (13) that anchors the manifold body (11) to an anchorage object (14), in which the anchoring portion (13) is at least one anchoring portion (13) disposed at an end (12b, 12d) of the low-temperature portion (18) of the manifold body (11).

In this aspect, the at least one anchoring portion (13) is disposed at the end (12b, 12d) of the low-temperature portion (18) of the manifold body (11). Therefore, the manifold (10) is less likely to be damaged. Since the anchoring portion (13) is disposed at the end (12b, 12d) of the low-temperature portion (18) of the manifold body (11), the anchoring portion (13) does not hinder the disposition of the high-temperature channel (LH) or the low-temperature channel (LM, LL, LML).

<2> In the manifold (10) according to another aspect, the anchoring portion (13) is disposed only in the low-temperature portion (18).

In this aspect, for example, when the low-temperature portions (18) are disposed on both sides of the high-temperature portion (16) in the manifold body (11) of the manifold (10) and the anchoring portion (13) is disposed in each of the low-temperature portions (18) on both sides, the contraction of the anchoring portions (13) in the two low-temperature portions (18) is canceled out by the expansion of the high-temperature portion (16) disposed between the low-temperature portions (18). Therefore, no tensile stress is generated in the low-temperature portions (18), and the manifold (10) is less likely to be damaged. In this case, the manifold (10) is fixed to the anchorage object (14) by the anchoring portions (13) disposed in the low-temperature portions (18) on both sides of the manifold body (11). Thus, the manifold (10) can stably be fixed to the anchorage object (14).

<3> In the manifold (10) according to another aspect, the anchoring portion (13) is disposed also in the high-temperature portion (16).

In this aspect, the manifold (10) is anchored to at least two locations, namely the low-temperature portion (18) and the high-temperature portion (16). Therefore, the manifold (10) can stably be fixed to the anchorage object (14). Since the anchoring portions (13) are disposed in the contracting low-temperature portion (18) and the expanding high-temperature portion (16), no tensile stress is generated in the manifold body (11), and the manifold (10) is less likely to be damaged.

<4> A manifold (10) according to one aspect includes: a manifold body (11) including a high-temperature portion (16) including a high-temperature channel (LH) through which a high-temperature fluid (F1) having a temperature equal to or higher than a first temperature flows, and a low-temperature portion (18) including a low-temperature channel (LM, LL, LML) through which a low-temperature fluid (F2, F3, F4) having a temperature equal to or lower than a second temperature that is lower than the first temperature flows; and anchoring portions (13) that are disposed in the high-temperature portion (16) and the low-temperature portion (18) and anchor the manifold body (11) to an anchorage object (14), in which the anchoring portion (13) disposed in the low-temperature portion (18) and the anchoring portion (13) disposed in the high-temperature portion (16) form a stress reducing structure (20).

In this aspect, the manifold (10) is anchored to at least two locations, namely the low-temperature portion (18) and the high-temperature portion (16). Therefore, the manifold (10) can stably be fixed to the anchorage object (14). Since the anchoring portions (13) are disposed in the contracting low-temperature portion (18) and the expanding high-temperature portion (16) to form the stress reducing structure (20) that cancels out the tensile stress due to the contraction and the compressive stress due to the expansion, the stress is reduced in the manifold (10) as a whole, and the manifold (10) is less likely to be damaged.

<5> In the manifold (10) according to one aspect, each of the anchoring portions (13) is one anchoring portion (13) disposed in each of the high-temperature portion (16) and the low-temperature portion (18).

In this aspect, the manifold (10) is anchored to two locations. Therefore, the manifold (10) can stably be anchored to the anchorage object (14). Even when the manifold (10) is fixed to the anchorage object (14) at two locations, the vicinity of the anchoring portion (13) in the low-temperature portion (18) contracts and the vicinity of the anchoring portion (13) in the high-temperature portion (16) expands. Therefore, the tensile stress due to the contraction and the compressive stress due to the expansion cancel out each other, and the stress is reduced in the manifold (10) as a whole.

<6> In the manifold (10) according to one aspect, the same number of the anchoring portions (13) is disposed in each of the high-temperature portion (16) and the low-temperature portion (18).

In this aspect, the same number of the anchoring portions (13) is disposed in each of the high-temperature portion (16) and the low-temperature portion (18). Therefore, the tensile stress due to the contraction and the compressive stress due to the expansion can effectively cancel out each other.

<7> In the manifold (10) according to one aspect, the at least one anchoring portion (13) is disposed at the end (12b, 12d) closer to the low-temperature channel (LM, LL, LML) than the high-temperature channel (LH).

In this aspect, the at least one anchoring portion (13) is disposed at the end (12b, 12d) closer to the low-temperature channel (LM, LL, LML) than the high-temperature channel (LH). Therefore, the manifold (10) is less likely to be damaged.

<8> In the manifold (10) according to one aspect, the at least one anchoring portion (13) is disposed at a location where two of the ends (12b, 12d) adjacent to each other intersect each other.

In this aspect, the at least one anchoring portion (13) is disposed at the location where two of the ends (12b, 12d) adjacent to each other intersect each other. Therefore, the manifold (10) can stably be fixed to the anchorage object (14) against external forces in two directions.

<9> In the manifold (10) according to one aspect, the high-temperature channel is at least one of a channel (LH1) from a compressor (1) to a cabin condenser (2) and a channel (LH2) from the cabin condenser (2) to a water-cooled condenser (3).

In this aspect, the manifold (10) including at least one of the channel (LH1) from the compressor (1) to the cabin condenser (2) and the high-temperature channel (LH2) from the cabin condenser (2) to the water-cooled condenser (3) can stably be fixed to the anchorage object (14).

<10> In the manifold (10) according to one aspect, the low-temperature channel is a channel (LL1) from a water-cooled condenser (3) to an evaporator (4).

In this aspect, the manifold (10) including the low-temperature channel (LL1) from the water-cooled condenser (3) to the evaporator (4) can stably be fixed to the anchorage object (14).

### INDUSTRIAL APPLICABILITY

The present disclosure is applicable to manifolds.

### Description of the Reference Numerals

1: compressor, 2: cabin condenser, 3: water-cooled condenser, 4: evaporator, 10: manifold, 11: manifold body, 12b: second end (end), 12d: fourth end (end), 13: anchoring portion, 14: vehicle body support frame (anchorage object), 16: high-temperature portion, 18: low-temperature portion, 20: stress reducing structure, F1: high-temperature fluid, F2: first low-temperature fluid (low-temperature fluid), F3: second low-temperature fluid (low-temperature fluid), F4: third low-temperature fluid (low-temperature fluid), LH: high-temperature channel, LH1: first high-temperature channel (high-temperature channel), LH2: second high-temperature channel (high-temperature channel), LL: low-temperature channel, LL1: first low-temperature channel (low-temperature channel), LM: medium-temperature channel (low-temperature channel), LML: medium-low-temperature channel (low-temperature channel)

## Claims

1. A manifold comprising:
a manifold body including a high-temperature portion including a high-temperature channel through which a high-temperature fluid having a temperature equal to or higher than a first temperature flows, and a low-temperature portion including a low-temperature channel through which a low-temperature fluid having a temperature equal to or lower than a second temperature that is lower than the first temperature flows; and
an anchoring portion that anchors the manifold body to an anchorage object, wherein
the anchoring portion is at least one anchoring portion disposed at an end of the low-temperature portion of the manifold body.

2. The manifold according to claim 1, wherein the anchoring portion is disposed only in the low-temperature portion.

3. The manifold according to claim 1, wherein the anchoring portion is disposed also in the high-temperature portion.

4. A manifold comprising:
a manifold body including a high-temperature portion including a high-temperature channel through which a high-temperature fluid having a temperature equal to or higher than a first temperature flows, and a low-temperature portion including a low-temperature channel through which a low-temperature fluid having a temperature equal to or lower than a second temperature that is lower than the first temperature flows; and
anchoring portions that are disposed in the high-temperature portion and the low-temperature portion and anchor the manifold body to an anchorage object,
wherein the anchoring portion disposed in the low-temperature portion and the anchoring portion disposed in the high-temperature portion form a stress reducing structure.

5. The manifold according to claim 4, wherein each of the anchoring portions is one anchoring portion disposed in each of the high-temperature portion and the low-temperature portion.

6. The manifold according to claim 4, wherein the same number of the anchoring portions is disposed in each of the high-temperature portion and the low-temperature portion.

7. The manifold according to claim 1, wherein the at least one anchoring portion is disposed at the end closer to the low-temperature channel than the high-temperature channel.

8. The manifold according to claim 1, wherein the at least one anchoring portion is disposed at a location where two of the ends adjacent to each other intersect each other.

9. The manifold according to claim 1, wherein the high-temperature channel is at least one of a channel from a compressor to a cabin condenser and a channel from the cabin condenser to a water-cooled condenser.

10. The manifold according to claim 1, wherein the low-temperature channel is a channel from a water-cooled condenser to an evaporator.
